(19) Europäisches Patentamt
European Patent Office
Office européen des brevets

(11) Veröffentlichungsnummer: **0 362 557 B1**

(12) # EUROPÄISCHE PATENTSCHRIFT

(45) Veröffentlichungstag der Patentschrift: **19.01.94**

(51) Int. Cl.[5]: **C09B 62/45**, D06P 1/384

(21) Anmeldenummer: **89116159.8**

(22) Anmeldetag: **01.09.89**

(54) **Wasserlösliche Azoverbindungenn, Verfahren zu ihrer Herstellung und ihre Verwendung als Farbstoffe.**

(30) Priorität: **02.09.88 DE 3829781**

(43) Veröffentlichungstag der Anmeldung:
**11.04.90 Patentblatt 90/15**

(45) Bekanntmachung des Hinweises auf die Patenterteilung:
**19.01.94 Patentblatt 94/03**

(84) Benannte Vertragsstaaten:
**BE CH DE ES FR GB IT LI**

(56) Entgegenhaltungen:
**EP-A- 0 126 026**
**EP-A- 0 265 857**
**CH-A- 471 877**

(73) Patentinhaber: **HOECHST AKTIENGESELLSCHAFT**

**D-65926 Frankfurt(DE)**

(72) Erfinder: **Schläfer, Ludwig, Dr.**
**Köningsberger Strasse 40**
**D-6233 Kelkheim (Taunus)(DE)**
Erfinder: **Russ, Werner Hubert, Dr.**
**41 Cedar Pond**
**Warwick, RI 02886(US)**

**EP 0 362 557 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Azofarbstoffe.

Aus der US-Patentschrift 4 473 498 sind einige Monoazoverbindungen bekannt, die zwei 4-(β-Sulfatoethylsulfonyl-methyl)-benzoylamino-Gruppen besitzen. Die Farbstoffeigenschaften dieser Verbindungen erschienen jedoch noch verbesserungswürdig.

Weiterhin sind in der Schweizerischen Patentschritt Nr. 471 877 Azofarbstoffe beschrieben, die sowohl in der Diazokomponente als auch in der Kupplungskomponente eine N-Methyl-N-(β-thiosulfatoethylsulfonyl)-amino-Gruppe als faserreaktive Gruppierung besitzen, wobei diese Gruppierung in der Kupplungskomponente über einen Benzoylrest an den eigentlichen aminogruppenhaltigen Rest der Kupplungskomponente gebunden ist.

Azofarbstoffe, die sowohl in der Diazokomponente als auch in der Kupplungskomponente eine faserreaktive Gruppe der Vinylsulfonreihe besitzen, wobei diese Gruppe in der Diazokomponente direkt an den aromatischen Rest und in der Kupplungskomponente über einen Phenylen-ureido-Rest an den aromatischen Rest der Kupplungskomponente gebunden ist, sind darüber hinaus aus der EP-A-0 265 857 bekannt.

Mit der vorliegenden Erfindung wurden nunmehr neue faserreaktive Monoazoverbindungen gefunden, die der allgemeinen Formel (1)

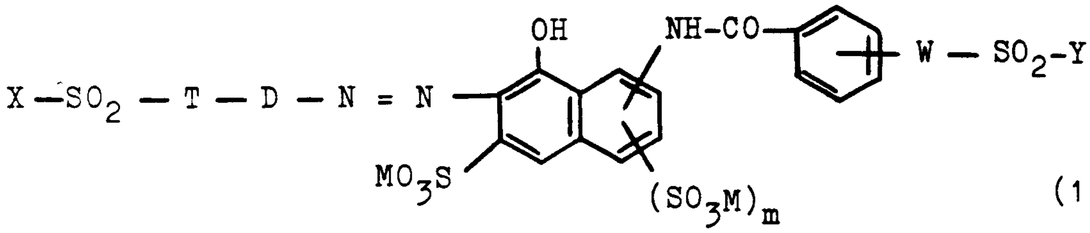

(1)

entsprechen, in welcher bedeuten:

M ist ein Wasserstoffatom oder ein Alkalimetall, wie Natrium, Kalium und Lithium;

T ist eine direkte kovalente Bindung oder ist eine Methylengruppe;

D ist eine Gruppe entsprechend der allgemeinen Formel (2a), (2b) oder (2c)

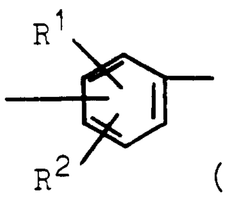

(2a)

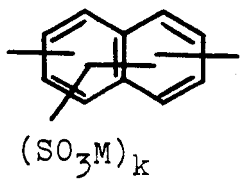

(2b)

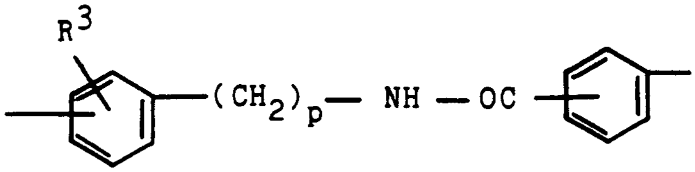

(2c)

in welchen

$R^1$ Alkyl von 1 bis 4 C-Atomen, wie Ethyl und insbesondere Methyl, Hydroxy oder Nitro oder bevorzugt Wasserstoff, Alkoxy von 1 bis 4 C-Atomen, wie Ethoxy und insbesondere Methoxy, Chlor, Brom oder Carboxy ist,

$R^2$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor oder Sulfo ist,

$R^3$ Wasserstoff oder Sulfo ist,

k für die Zahl Null oder 1 steht (wobei im Falle k gleich Null diese Gruppe ein Wasserstoffatom bedeutet),

p für die Zahl Null, 1 oder 2 steht und
M die obengenannte Bedeutung besitzt;
m ist die Zahl Null, 1 oder 2 (wobei im Falle m gleich Null diese Gruppe ein Wasserstoffatom bedeutet);
W hat eine der Bedeutungen von T;
X ist Vinyl, β-Chlorethyl oder β-Sulfatoethyl, bevorzugt Vinyl und insbesondere β-Sulfatoethyl;
Y ist Vinyl oder β-Chlorethyl, bevorzugt β-Chlorethyl;

die faserreaktive Benzoylaminogruppierung steht an den 8-Naphthol-Rest in 1-, 2- oder 3-Stellung gebunden;

die einzelnen Formelglieder können zueinander gleiche oder voneinander verschiedene Bedeutungen besitzen.

Die Substituenten "Sulfo", "Carboxy", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM und Sulfatogruppen Gruppen entsprechend der allgemeinen Formel $-OSO_3M$ , in welchen M die obengenannte Bedeutung besitzt.

Die neuen Azoverbindungen können sowohl in saurer Form als auch in Form ihrer Salze vorliegen. Bevorzugt sind sie in Form der Salze und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien. Sie lassen sich nach allen Färbe- und Druckverfahren, wie sie für faserreaktive Farbstoffe zahlreich beschrieben sind, gut einsetzen und liefern mit hohen Farbausbeuten und gutem Farbaufbau farbstarke Färbungen und Drucke mit guten Echtheitseigenschaften, von denen insbesondere die Naßechtheiten hervorgehoben werden können.

Von den erfindungsgemäßen Azoverbindungen der allgemeinen Formel (1) sind solche bevorzugt, in welchen D einen Rest der allgemeinen Formel (2a) oder (2b) bedeutet, desweiteren solche, in welchen X für die β-Sulfatoethyl-Gruppe steht, weiterhin solche, in denen T eine kovalente Bindung darstellt, desweiteren solche, in welchen W eine direkte Bindung oder insbesondere eine Methylengruppe ist, und desweiteren solche, in welchen Y für die β-Chlorethyl-Gruppe steht und W gleichzeitig die Methylengruppe ist.

Bevorzugt von den Verbindungen (1) sind insbesondere solche, die der allgemeinen Formel (1a)

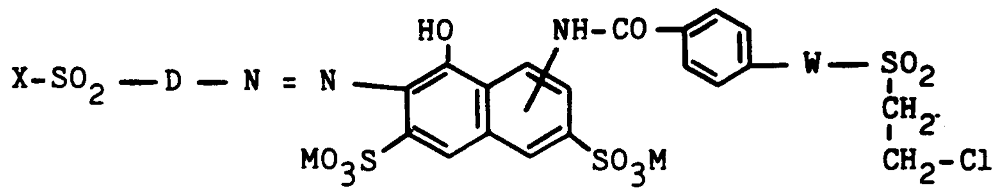

(1a)

entsprechen, in welcher M, X, D und W die obengenannten, insbesondere bevorzugten, Bedeutungen haben, wobei W insbesondere bevorzugt für die Methylengruppe steht, und die Benzoylaminogruppierung in 1- oder 2-Stellung, bevorzugt in 1-Stellung, an den 8-Naphtholrest gebunden ist, desweiteren solche Azoverbindungen, die der allgemeinen Formel (1b)

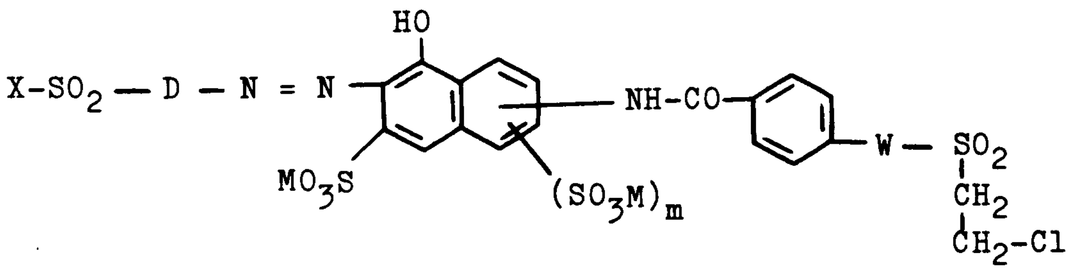

(1b)

entsprechen, in welcher die Benzoylaminogruppierung in 2- oder 3-Stellung, bevorzugt in 3-Stellung, der 8-Naphthol-Komponente gebunden ist und m für die Zahl Null oder 1 steht sowie X, D, M und W die obengenannten, insbesondere bevorzugten, Bedeutungen haben; von diesen ist W insbesondere bevorzugt die Methylengruppe, desweiteren m insbesondere bevorzugt die Zahl 1, wobei hier diese Gruppe $-SO_3M$

bevorzugt in 4-Stellung gebunden ist.

Die vorliegende Erfindung betrifft weiterhin ein Verfahren zur Herstellung der neuen Verbindungen der allgemeinen Formel (1), das dadurch gekennzeichnet ist, daß man ein Diazoniumsalz einer aromatischen Aminoverbindung entsprechend der allgemeinen Formel (3)

$$X - SO_2 - T - D - NH_2 \quad (3)$$

in welcher X, T und D die obengenannten Bedeutungen haben, mit einer Verbindung entsprechend der allgemeinen Formel (4)

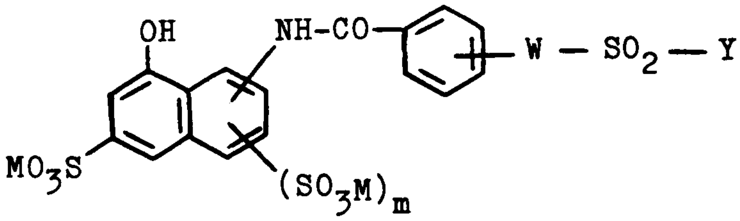

(4)

in welcher M, m, W und Y die obengenannten Bedeutungen haben, kuppelt.

Die Überführung der Aminoverbindung der allgemeinen Formel (3) in deren Diazoniumsalz erfolgt in bekannter Weise der Diazotierung von aromatischen Aminoverbindungen, so beispielsweise in wäßrigem Medium mittels salpetriger Säure bei einer Temperatur zwischen -5 °C und +10 °C und einem pH-Wert von kleiner als 2,5. Die erfindungsgemäße Kupplungsreaktion des Diazoniumsalzes mit der Verbindung (4) erfolgt ebenfalls analog bekannten Verfahrensweisen der Umsetzung von Diazoniumverbindungen mit Kupplungskomponenten zu Azoverbindungen, wie beispielsweise in wäßrigem Medium bei einem pH-Wert zwischen 3 und 8, bevorzugt zwischen 4 und 7, und bei einer Temperatur zwischen 5 und 35 °C, bevorzugt zwischen 10 und 25 °C.

Die Ausgangsverbindungen der allgemeinen Formel (3) sind zahlreich in der Literatur beschrieben. Verbindungen der allgemeinen Formel (3) sind beispielsweise:
4-(β-Sulfatoethylsulfonyl)-anilin, 4-Vinylsulfonyl-anilin, 4-(β-Sulfatoethylsulfonyl-methyl)-anilin, 3-(β-Sulfatoethylsulfonyl-methyl)-anilin, 3-(β-Sulfatoethylsulfonyl)-anilin, 2-Methoxy-4-(β-sulfatoethylsulfonyl)-anilin, 2-Methoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2-Brom-4-(β-sulfatoethylsulfonyl)-anilin, 2-Sulfo-4-(β-sulfatoethylsulfonyl)-anilin, 2-Sulfo-5-(β-sulfatoethylsulfonyl)-anilin, 2,5-Dichlor-4-(β-sulfatoethylsulfonyl)-anilin, 4-(β-Sulfatoethylsulfonyl)-1-aminonaphthalin, 5-(β-Sulfatoethylsulfonyl)-2-amino-naphthalin, 6-(β-Sulfatoethylsulfonyl)-2-aminonaphthalin, 7-(β-Sulfatoethylsulfonyl)-2-aminonaphthalin, 8-(β-Sulfatoethylsulfonyl)-2-aminonaphthalin, 5-(β-Sulfatoethylsulfonyl)-1-sulfo-2-aminonaphthalin, 6-(β-Sulfatoethylsulfonyl)-1-sulfo-2-aminonaphthalin, 6-(β-Sulfatoethylsulfonyl)-8-sulfo-2-aminonaphthalin, 8-(β-Sulfatoethylsulfonyl)-6-sulfo-2-aminonaphthalin, 3'-(β-Sulfatoethylsulfonyl)-4-amino-benzanilid, 4-Amino-N'-β-[4'-(β'-sulfatoethylsulfonyl)-phenyl]-ethyl-benzanilid und 4-Amino-N'-β-[2'-sulfo-4'-(β'-sulfatoethylsulfonyl)-phenyl]-ethyl-benzanilid.

Die Kupplungskomponenten der allgemeinen Formel (4) sind ebenfalls aus der Literatur bekannt. Solche Verbindungen sind beispielsweise:
1-[3'-(β-Chlorethylsulfonyl)]-benzoylamino-3,6-disulfo-8-naphthol, 1-[4'-(β-Chlorethylsulfonyl)]-benzoylamino-3,6-disulfo-8-naphthol, 1-[3'-(β-Chlorethylsulfonyl)]-benzoylamino-4,6-disulfo-8-naphthol, 1-[3'-(β-Chlorethylsulfonyl)]-benzoylamino-4,6-disulfo-8-naphthol, 2-[3'- oder 4'-(β-Chlorethylsulfonyl)]-benzoylamino-6-sulfo-8-naphthol, 3-[3'- oder 4'-(β-Chlorethylsulfonyl)]-benzoylamino-6-sulfo-8-naphthol, 3-[3'- oder 4'-(β-Chlorethylsulfonyl)]-benzoylamino-4,6-disulfo-8-naphthol, 2-[3'- oder 4'-(β-Chlorethylsulfonyl-methyl)]-benzoylamino-6-sulfo-8-naphthol, 3-[3'- oder 4'-(β-Chlorethylsulfonyl-methyl)]-benzoylamino-6-sulfo-8-naphthol, 3-[3'- oder 4'-(β-Chlorethylsulfonyl-methyl)]-benzoylamino-4,6-disulfo-8-naphthol.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) - im nachfolgenden als Verbindungen (1) bezeichnet - haben faserreaktive Eigenschaften und besitzen wertvolle Farbstoffeigenschaften. Sie können deshalb zum Färben (einschließlich Bedrucken) von natürlichen, regenerierten oder synthetischen

hydroxygruppenhaltigen und/oder carbonamidgruppenhaltigen Materialien, beispielsweise in Form von Flächengebilden, wie Papier und Leder oder von Polyamid oder Polyurethan, insbesondere aber von solchen Materialien in Faserform, wie Cellulosefasermaterialien, Seide, Wolle und synthetische Polyamid- und Polyurethanfasern, verwendet werden. Auch können die bei der Synthese der Verbindungen (1) anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Die Verbindungen (1) lassen sich, gemäß der erfindungsgemäßen Anwendung, auf den genannten Substraten, insbesondere auf den genannten Fasermaterialien, nach den für wasserlösliche, insbesondere faserreaktive, Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe-und Fixierweisen sind in der Literatur zahlreich beschrieben, wie beispielsweise in der DE-A-3 025 572.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen der Applikation und Fixierung von faserreaktiven Farbstoffen vorgehen.

Die erfindungsgemäßen Monoazoverbindungen (1) zeichnen sich durch eine gute Wasserlöslichkeit und einen guten Farbaufbau aus. Ihr Fixiergrad ist sehr hoch, weswegen der nicht fixierte Anteil nur gering ist, so daß beim Fertigstellen der Färbungen und Drucke nur wenig von der angewendeten Verbindung (1) mit dem Spül- oder Waschwasser ins Abwasser gelangt. Nicht fixierte Anteile lassen sich gut auswaschen. Erwähnenswert ist weiterhin ihre gute Stabilität in Druckpasten, Klotzflotten und Färbebädern. Ihre Färbungen und Drucke besitzen, insbesondere auf Cellulosefasermaterialien, gute Gebrauchs- und Fabrikationsechtheiten, wie beispielsweise gute Licht-, Wasch-, Chlorbadewasser-, Abgas-, Bügel-, Plissier-, Dekatier-, Trockenreinigungs-, Reib-, Säure-, Alkali- und Überfärbeechtheiten, gute alkalische und saure Schweißechtheiten und eine hohe Säurelagerbeständigkeit. Die Drucke werden mit scharfen Konturen und einem klaren Weißfond erhalten; Drucke und Färbungen flecken auf beiliegendem Material nicht ab.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die im sichtbaren Bereich angegebenen Absorptionsmaxima ($\lambda_{max}$-Werte) wurden aus wäßriger Lösung der Alkalimetallsalze bestimmt. In den Tabellenbeispielen sind die $\lambda_{max}$-Werte bei der Farbtonangabe in Klammern gesetzt; die Wellenlängenangabe bezieht sich auf nm.

**Beispiel 1**

31,9 Teile 1-Amino-4,6-disulfo-8-naphthol werden in wäßriger Lösung bei einem pH-Wert von 4 bis 5 und einer Temperatur von 15 bis 20 °C mit 35 Teilen 3-(β-Chlorethylsulfonyl)-benzoylchlorid umgesetzt. Die Lösung der so erhaltenen Kupplungskomponente wird in die salzsaure Suspension des auf üblichem Wege hergestellten Diazoniumsalzes von 28,1 Teilen 4-(β-Sulfatoethylsulfonyl)-anilin in 100 Teilen Wasser eingerührt; die Kupplungsreaktion erfolgt bei einem pH-Wert von 5 bis 6. Die gebildete Azoverbindung wird mit Natriumchlorid in einer Menge von 20 %, bezogen auf das Volumen der Lösung, ausgesalzen (zur Vervollständigung der Fällung wird der Ansatz noch einige Zeit bei einem pH-Wert von 4 gerührt), der Niederschlag abfiltriert, mit einer 20%igen wäßrigen Natriumchloridlösung gewaschen und unter reduziertem Druck getrocknet.

Man erhält ein dunkelrotes, elektrolythaltiges Pulver des erfindungsgemäßen Natriumsalzes der Verbindung der Formel

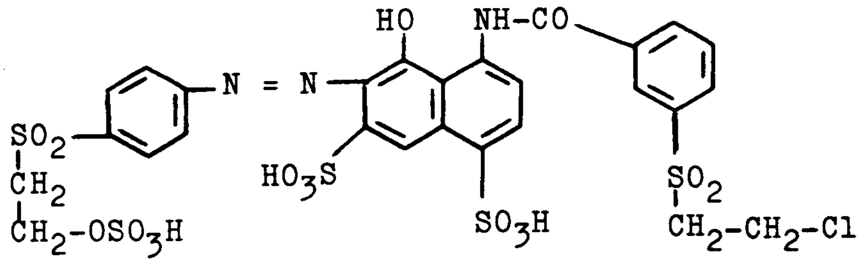

($\lambda_{max}$ = 492 nm)

die sehr gute faserreaktive Farbstoffeigenschaften besitzt. Sie liefert nach den in der Technik üblichen Färbe- und Druckverfahren für faserreaktive Farbstoffe auf den in der Beschreibung genannten Materialien, insbesondere auf Cellulosefasermaterialien, farbstarke brillante rote Färbungen und Drucke von guten Echtheitseigenschaften, von denen insbesondere die Wasch- und Schweißechtheiten, die guten Lichtechtheiten im trockenen oder mit Trinkwasser oder einer Schweißlösung befeuchteten Zustand sowie die gute Säurelagerbeständigkeit (kein "acid fading", d.h. Färbungen und Drucke werden beim Lagern im sauerfeuchten Zustand, wie beispielsweise in einer Atmosphäre, die saure Dämpfe enthält, nicht angegriffen) hervorgehoben werden können. Die erfindungsgemäße Verbindung besitzt einen hohen Fixiergrad und guten Farbaufbau; die mit ihr erhältlichen Drucke zeigen einen klaren Weißfond.

**Beispiel 2**

Man bereitet die Lösung von 1-N-[4'-($\beta$-Chlorethylsulfonyl-methyl)-benzoyl]-amino-3,6-disulfo-8-naphthol als Kupplungskomponente durch Umsetzung von 31,9 Teilen 1-Amino-3,6-disulfo-8-naphthol in neutraler Lösung mit 30 Teilen 4-($\beta$-Chlorethylsulfonyl-methyl)-benzoylchlorid analog den Angaben des Beispieles 1, versetzt diese mit einer auf ülichem Wege hergestellten salzsauren Diazoniumsalzsuspension von 40 Teilen 4-Amino-3'-($\beta$-chlorethylsulfonyl)-benzanilid in etwa 500 Teilen Wasser. Die Kupplungsreaktion wird bei einem pH-Wert zwischen 4 und 5 durchgeführt.

Die synthetisierte erfindungsgemäße Azoverbindung wird in üblicher Weise durch Aussalzen mit Natrium- oder Kaliumchlorid oder durch Sprühtrocknung isoliert. Man erhält ein dunkelrotes, eletrolythaltiges Pulver des Alkalimetallsalzes der Verbindung der Formel

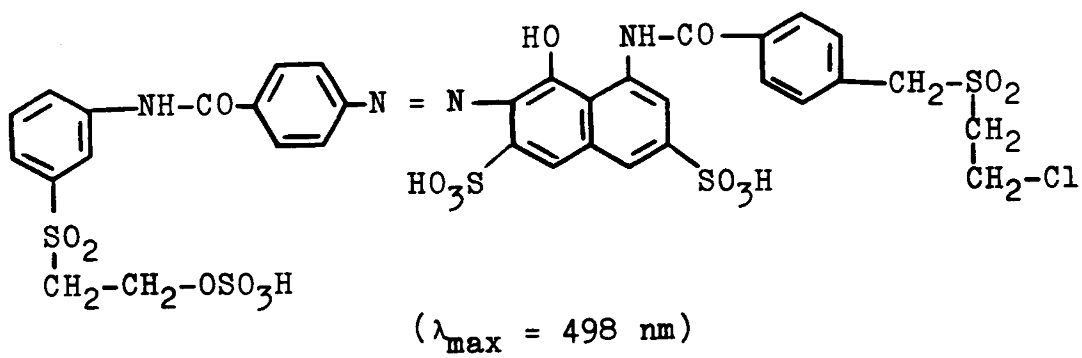

($\lambda_{max}$ = 498 nm)

die sehr faserreaktive Farbstoffeigenschaften besitzt und nach den in der Technik üblichen Färbe- und Druckverfahren farbstarke, blaustichig rote Färbungen und Drucke auf den in der Beschreibung genannten Materialien, insbesondere Cellulosefasermaterialien, liefert. Die Färbungen und Drucke zeichnen sich durch gute Echtheitseigenschaften aus, von denen die guten Waschechtheiten, Schweißechtheiten, Trockenlicht- und Naßlichtechtheiten und die gute Säurelagerbeständigkeit hervorgehoben werden können. Der Farbaufbau und der Fixiergrad der erfindungsgemäßen Verbindungen ist hoch; die Drucke zeigen einen klaren Weißfond.

**Beispiel 3**

Analog der Verfahrensweise des Beispieles 1 setzt man 2,5-Dimethoxy-4-(β-sulfatoethylsulfonyl)-anilin als Diazokomponente und 1-N-[4'-(β-Chlorethylsulfonyl)-benzoyl]-amino-3,6-disulfo-8-naphthol als Kupplungskomponente in äquivalenter Menge um.
Die erfindungsgemäße Azoverbindung der Formel

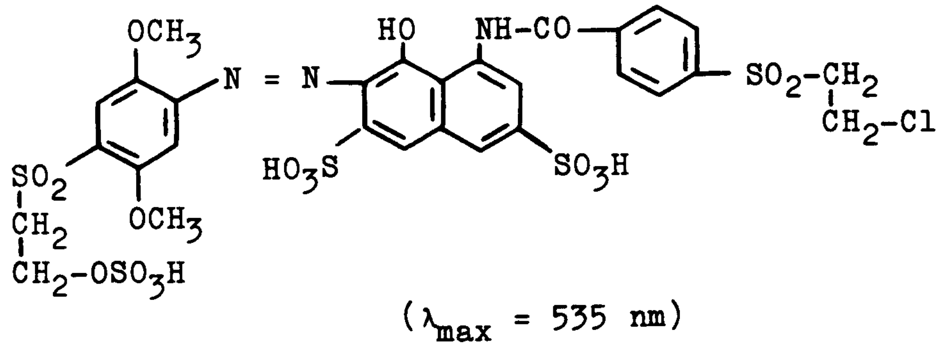

($\lambda_{max}$ = 535 nm)

wird in Form ihres Alkalimetallsalzes isoliert und zeigt sehr gute faserreaktive Farbstoffeigenschaften. Mit ihr werden farbstarke, rotviolette Färbungen und Drucke mit guten Echtheiten erhalten, wie beispielsweise gute Wasch-, Schweiß- und Lichtechtheiten sowie eine gute Säurelagerbeständigkeit. Die erfindungsgemäße Verbindung zeichnet sich weiterhin durch einen hohen Fixiergrad und einen guten Farbaufbau aus.

**Beispiel 4**

Eine Lösung von 89,3 Teilen der erfindungsgemäßen Azoverbindung von Beispiel 4 in 1000 Teilen Wasser wird bei einer Temperatur von etwa 20 °C mittels konzentrierter wäßriger Natronlauge auf einen pH-Wert von 11 bis 12 gestellt. Der Ansatz wird 5 Minuten bei 20 °C weitergerührt und sodann mittels eines Gemisches aus konzentrierter wäßriger Salzsäure und Essigsäure auf einen pH-Wert von 5 gestellt. Die so synthetisierte Vinylsulfonyl-Azoverbindung fällt nach kurzer Zeit aus; die Fällung wird durch Zugabe von Natriumchlorid oder Kaliumchlorid vervollständigt. Der Niederschlag wird isoliert und unter reduziertem Druck getrocknet.

Man erhält ein blaurotes Pulver des Alkalimetallsalzes der Azoverbindung der Formel

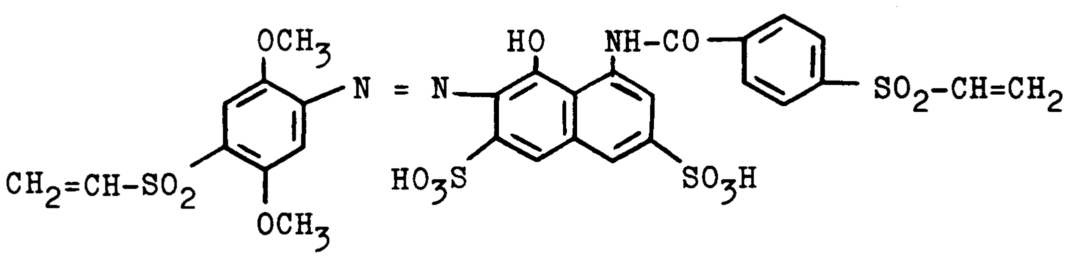

($\lambda_{max}$ = 534 nm)

mit einem nur geringen Elektrolytgehalt. Auch diese erfindungsgemäße Verbindung zeigt sehr gute faserreaktive Farbstoffeigenschaften und liefert insbesondere auf Cellulosefasermaterialien blaustichig rote Färbungen mit gleich guten Echtheitseigenschaften, wie für die Färbungen der erfindungsgemäßen Verbindung des Beispieles 4 beschrieben.

**Beispiele 5 bis 66**

In den nachfolgenden Tabellenbeispielen sind weitere erfindungsgemäße Monoazoverbindungen mit Hilfe der Komponenten entsprechend der allgemeinen Formel (1) beschrieben. Sie lassen sich in erfindungsgemäßer Weise, beispielsweise einem der obigen Ausführungsbeispiele, mittels der aus dem jeweiligen Tabellenbeispiel ersichtlichen Komponenten herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke echte Färbungen und Drucke in den in dem jeweiligen Tabellenbeispiel für Färbungen auf Baumwolle angegebenen Farbtönen.

| Bsp. | Rest $X-SO_2-T-D-$ | Komponente entsprechend Formel (4) | Farbton |
|---|---|---|---|
| 5 | 3-(ß-Sulfatoethylsulfonyl)-phenyl | 1-N-[3'-(ß-chlorethylsulfonyl)-benzoyl]-amino-3,6-disulfo-8-naphthol | rot (500) |
| 6 | 2-Methoxy-5-(ß-sulfatoethylsulfonyl)-phenyl | dito | blaustichig rot (515) |
| 7 | 2-Methoxy-4-(ß-sulfatoethylsulfonyl)-phenyl | dito | rotstichig violett (520) |
| 8 | 2-Methoxy-5-methyl-4-(ß-sulfatoethylsulfonyl)-phenyl | dito | rotstichig violett (525) |
| 9 | 2,5-Dimethoxy-4-(ß-sulfatoethylsulfonyl)-phenyl | dito | violett (531) |
| 10 | 2-Brom-4-(ß-sulfatoethylsulfonyl)-phenyl | dito | blaustichig rot (502) |
| 11 | 2-Sulfo-4-(ß-sulfatoethylsulfonyl)-phenyl | dito | blaustichig rot |
| 12 | 2-Sulfo-5-(ß-sulfatoethylsulfonyl)-phenyl | dito | rot (500) |
| 13 | 2-Chlor-5-(ß-sulfatoethylsulfonyl)-phenyl | dito | rot |
| 14 | 2,5-Dichlor-5-(ß-sulfatoethylsulfonyl)-phenyl | dito | rot |
| 15 | 2-Carboxy-5-(ß-sulfatoethylsulfonyl)-phenyl | dito | blaustichig rot |
| 16 | 4-Methoxy-3-(ß-sulfatoethylsulfonyl)-phenyl | dito | blaustichig rot (507) |

| Bsp. | Rest $X-SO_2-T-D-$ | Komponente entsprechend Formel (4) | Farbton |
|---|---|---|---|
| 17 | 2-Methoxy-5-chlor-4-(ß-sulfatoethylsulfonyl)-phenyl | dito | rotstichig violett (511) |
| 18 | 2,4-Dimethoxy-5-(ß-sulfatoethylsulfonyl)-phenyl | dito | rotstichig violett |
| 19 | 4-Chlor-3-(ß-sulfatoethylsulfonyl)-phenyl | dito | blaustichig rot |
| 20 | 4-(ß-Sulfatoethylsulfonyl)-naphth-1-yl | dito | violett (552) |
| 21 | 5-(ß-Sulfatoethylsulfonyl)-naphth-2-yl | dito | rotstichig violett |
| 22 | 6-(ß-Sulfatoethylsulfonyl)-naphth-2-yl | dito | rotstichig violett |
| 23 | 7-(ß-Sulfatoethylsulfonyl)-naphth-2-yl | dito | rotstichig violett |
| 24 | 8-(ß-Sulfatoethylsulfonyl)-naphth-2-yl | dito | rotstichig violett (545) |
| 25 | 6-(ß-Sulfatoethylsulfonyl)-1-sulfo-naphth-2-yl | dito | blaustichig rot (534) |
| 26 | 8-(ß-Sulfatoethylsulfonyl)-6-sulfo-naphth-2-yl | dito | rotstichig violett (542) |
| 27 | 6-(ß-Sulfatoethylsulfonyl)-8-sulfo-naphth-2-yl | dito | rotstichig violett (540) |
| 28 | 5-(ß-Sulfatoethylsulfonyl)-1-sulfo-naphth-2-yl | dito | rotstichig violett |

| Bsp. | Rest $X-SO_2-T-D-$ | Komponente entsprechend Formel (4) | Farbton |
|---|---|---|---|
| 29 | 6-Vinylsulfonyl-1-sulfo-naphth-2-yl | dito | blaustichig rot (538) |
| 30 | 8-Vinylsulfonyl-6-sulfo-naphth-2-yl | dito | rotstichig violett (540) |
| 31 | 6-Vinylsulfonyl-8-sulfo-naphth-2-yl | dito | rotstichig violett |
| 32 | 5-Vinylsulfonyl-1-sulfo-naphth-2-yl | dito | blaustichig rot (535) |
| 33 | 4-Vinylsulfonyl-2-sulfo-phenyl | dito | blaustichig rot (495) |
| 34 | 5-Vinylsulfonyl-2-sulfo-phenyl | dito | rot (492) |
| 35 | 4-{N-[3'-(ß-Sulfatoethylsulfonyl)-phenyl]-amidocarbonyl}-phenyl | dito | rot (498) |
| 36 | 4-{N-ß-[4'-(ß'-Sulfatoethyl-sulfonyl)-phenyl]-ethyl-amidocarbonyl}-phenyl | dito | blaustichig rot |
| 37 | 4-{N-ß-[3'-Sulfo-4'-(ß'-sulfatoethylsulfonyl)-phenyl]-ethyl-amidocarbonyl}-phenyl | dito | blaustichig rot |

| Bsp. | Rest $X-SO_2-T-D-$ | Komponente entsprechend Formel (4) | Farbton |
|---|---|---|---|
| 38 | 4-(ß-Sulfatoethylsulfonyl)-phenyl | 1-N-[3'-(ß-chlorethylsulfonyl)-benzoyl]-amino-3,6-disulfo-8-naphthol | blaustichig rot (502) |
| 39 | dito | 1-N-[4'-(ß-chlorethylsulfonyl)-benzoyl]-amino-3,6-disulfo-8-naphthol | blaustichig rot (500) |
| 40 | dito | 1-[4'-(ß-Chlorethylsulfonyl-methyl)-benzoyl]-amino-4,6-disulfo-8-naphthol | rot |
| 41 | dito | 1-[3'-(ß-Chlorethylsulfonyl-methyl)-benzoyl]-amino-4,6-disulfo-8-naphthol | rot (490) |
| 42 | dito | 1-[4'-(ß-Chlorethylsulfonyl)-benzoyl]-amino-4,6-disulfo-8-naphthol | rot |
| 43 | 4-Vinylsulfonyl-phenyl | 1-[4'-(ß-Chlorethylsulfonyl-methyl)-benzoyl]-amino-4,6-disulfo-8-naphthol | rot (495) |
| 44 | dito | 1-[4'-(ß-Chlorethylsulfonyl-methyl)-benzoyl]-amino-3,6-disulfo-8-naphthol | rot |
| 45 | dito | 3-[4'-(ß-Chlorethylsulfonyl-methyl)-benzoyl]-amino-4,6-disulfo-8-naphthol | orange |

| Bsp. | Rest $X-SO_2-T-D-$ | Komponente entsprechend Formel (4) | Formel |
|---|---|---|---|
| 46 | 4-Vinylsulfonyl-phenyl | 2-[4'-(ß-Chlorethylsulfonyl-methyl)-benzoyl]-amino-3,6-disulfo-8-naphthol | rot |
| 47 | 4-(ß-Sulfatoethylsulfonyl)-phenyl | 3-[4'-(ß-Chlorethylsulfonyl-methyl)-benzoyl]-amino-6-sulfo-8-naphthol | orange (480) |
| 48 | dito | 2-[4'-(ß-Chlorethylsulfonyl-methyl)-benzoyl]-amino-6-sulfo-8-naphthol | orange (482) |
| 49 | 2-Methoxy-5-(ß-sulfatoethylsulfonyl)-phenyl | 1-[4'-(ß-Chlorethylsulfonyl-methyl)-benzoyl]-amino-3,6-disulfo-8-naphthol | blaustichig rot |
| 50 | dito | 1-[4'-(ß-Chlorethylsulfonyl-methyl)-benzoyl]-amino-4,6-disulfo-8-naphthol | rot |
| 51 | dito | 2-[4'-(ß-Chlorethylsulfonyl-methyl)-benzoyl]-amino-3,6-disulfo-8-naphthol | rot (510) |
| 52 | dito | 3-[4'-(ß-Chlorethylsulfonyl-methyl)-benzoyl]-amino-4,6-disulfo-8-naphthol | orange |
| 53 | 2,5-Dimethoxy-4-(ß-sulfatoethylsulfonyl)-phenyl | dito | rot |
| 54 | dito | 1-[4'-(ß-Chlorethylsulfonyl-methyl)-benzoyl]-amino-3,6-disulfo-8-naphthol | violett (532) |
| 55 | dito | 1-[4'-(ß-Chlorethylsulfonyl-methyl)-benzoyl]-amino-4,6-disulfo-8-naphthol | rotstichig violett |
| 56 | dito | 2-[4'-(ß-Chlorethylsulfonyl-methyl)-benzoyl]-amino-3,6-disulfo-8-naphthol | rotstichig violett (530) |
| 57 | 6-(ß-Sulfatoethylsulfonyl)-1-sulfo-naphth-2-yl | dito | blaustichig rot |

| Bsp. | Rest $X-SO_2-T-D-$ | Komponente entsprechend Formel (4) | Farbton |
|---|---|---|---|
| 58 | dito | 3-[4'-(ß-Chlorethylsulfonyl-methyl)-benzoyl]-amino-4,6-disulfo-8-naphthol | blaustichig rot (540) |
| 59 | dito | 1-[4'-(ß-Chlorethylsulfonyl-methyl)-benzoyl]-amino-3,6-disulfo-8-naphthol | rotstichig violett (506) |
| 60 | dito | 1-[4'-(ß-Chlorethylsulfonyl-methyl)-benzoyl]-amino-4,6-disulfo-8-naphthol | blaustichig rot |
| 61 | dito | 3-[4'-(ß-Chlorethylsulfonyl-methyl)-benzoyl]-amino-6-sulfo-8-naphthol | orange |
| 62 | dito | 2-[4'-(ß-Chlorethylsulfonyl-methyl)-benzoyl]-amino-6-sulfo-8-naphthol | rot |
| 63 | 6-Vinylsulfonyl-1-sulfo-naphth-2-yl | 1-[4'-(ß-Chlorethylsulfonyl)-benzoyl]-amino-3,6-disulfo-8-naphthol | blaustichig rot (538) |
| 64 | dito | 1-[4'-(ß-Chlorethylsulfonyl)-benzoyl]-amino-4,6-disulfo-8-naphthol | rot (508) |
| 65 | 4-(ß-Sulfatoethylsulfonyl)-phenyl | 1-[4'-(ß-Chlorethylsulfonyl-methyl)-benzoyl]-amino-3,6-disulfo-8-naphthol | blaustichig rot |
| 66 | dito | 1-[3'-(ß-Chlorethylsulfonyl)-benzoyl]-amino-3,6-disulfo-8-naphthol | blaustichig rot |

**Patentansprüche**

**Patentansprüche für folgende Vertragsstaaten : BE, CH, LI, DE, GB, FR, IT**

**1.** Eine wasserlösliche Azoverbindung entsprechend der allgemeinen Formel (1)

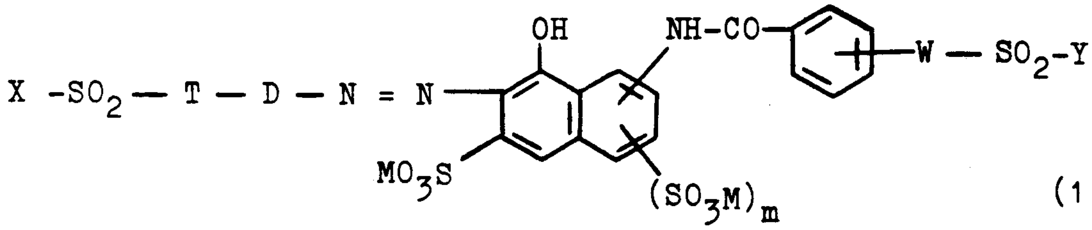

(1)

in welcher bedeuten:

- M ist ein Wasserstoffatom oder ein Alkalimetall;
- T ist eine direkte kovalente Bindung oder ist eine Methylengruppe;
- D ist eine Gruppe entsprechend der allgemeinen Formel (2a), (2b) oder (2c)

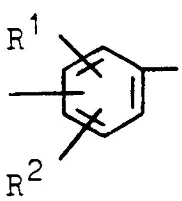

(2a)

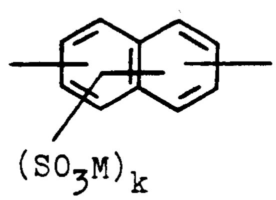

(2b)

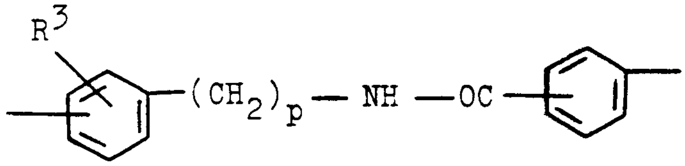

(2c)

in welchen

- $R^1$ Alkyl von 1 bis 4 C-Atomen, Hydroxy, Nitro, Wasserstoff, Alkoxy von 1 bis 4 C-Atomen, Chlor, Brom oder Carboxy ist,
- $R^2$ Wasserstoff, Alkyl von 1 bis 4 C-Atomen, Alkoxy von 1 bis 4 C-Atomen, Chlor oder Sulfo ist,
- $R^3$ Wasserstoff oder Sulfo ist,
- k für die Zahl Null oder 1 steht (wobei im Falle k gleich Null diese Gruppe ein Wasserstoffatom bedeutet),
- p für die Zahl Null, 1 oder 2 steht und
- M die obengenannte Bedeutung besitzt;
- m ist die Zahl Null, 1 oder 2 (wobei im Falle m gleich Null diese Gruppe ein Wasserstoffatom bedeutet);
- W hat eine der Bedeutungen von T;
- X ist Vinyl, β-Chlorethyl oder β-Sulfatoethyl, bevorzugt Vinyl oder β-Sulfatoethyl;
- Y ist Vinyl oder β-Chlorethyl;

die faserreaktive Benzoylaminogruppierung steht an den 8-Naphthol-Rest in 1-, 2- oder 3-Stellung gebunden;

die einzelnen Formelglieder können zueinander gleiche oder voneinander verschiedene Bedeutungen besitzen.

2. Verbindung nach Anspruch 1, dadurch gekennzeichnet, daß D einen Rest der allgemeinen Formel (2)

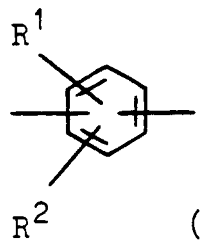

(2a)

ist, in welcher $R^1$ Wasserstoff, Methoxy, Ethoxy, Chlor, Brom oder Carboxy bedeutet und $R^2$ Wasserstoff, Methyl, Ethyl, Methoxy, Ethoxy, Chlor oder Sulfo ist.

3. Verbindung nach Anspruch 1, dadurch gekennzeichnet, daß D ein Naphthylenrest ist, der durch eine Sulfogruppe substituiert sein kann.

4. Verbindung nach mindestens einem der Ansprüche 1 bis 3, dadurch gekennzeichnet, daß X für die $\beta$-Sulfatoethyl-Gruppe steht.

5. Verbindung nach mindestens einem der Ansprüche 1 bis 4, dadurch gekennzeichnet, daß Y für die $\beta$-Chlorethyl-Gruppe steht.

6. Verbindung nach mindestens einem der Ansprüche 1 bis 5, dadurch gekennzeichnet, daß W die Methylengruppe bedeutet.

7. Verbindung nach mindestens einem der Ansprüche 1 bis 6, dadurch gekennzeichnet, daß T eine direkte kovalente Bindung bedeutet.

8. Verbindung nach Anspruch 6, dadurch gekennzeichnet, daß Y den $\beta$-Chlorethyl-Rest darstellt.

9. Verbindung nach Anspruch 1 entsprechend der allgemeinen Formel (1a)

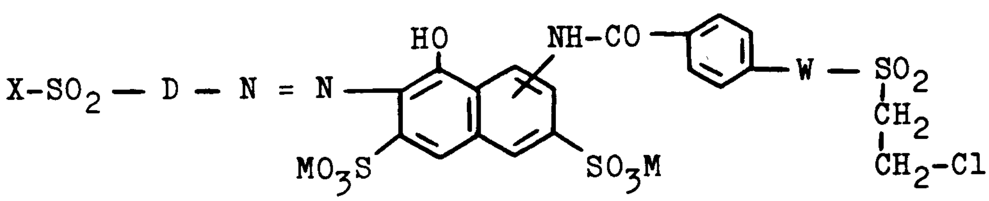

(1a)

in welcher die Benzoylaminogruppierung in 1- oder 2-Stellung, bevorzugt in 1-Stellung, an den 8-Naphtholrest gebunden ist und M, X, D und W eine der in Anspruch 1 genannten Bedeutungen oder eine der in den Ansprüchen 2, 3, 4 und 6 genannten bevorzugten Bedeutungen haben.

10. Verbindung nach Anspruch 9, dadurch gekennzeichnet, daß W die Methylengruppe bedeutet.

**11.** Verbindung nach Anspruch 1 entsprechend der allgemeinen Formel (1b)

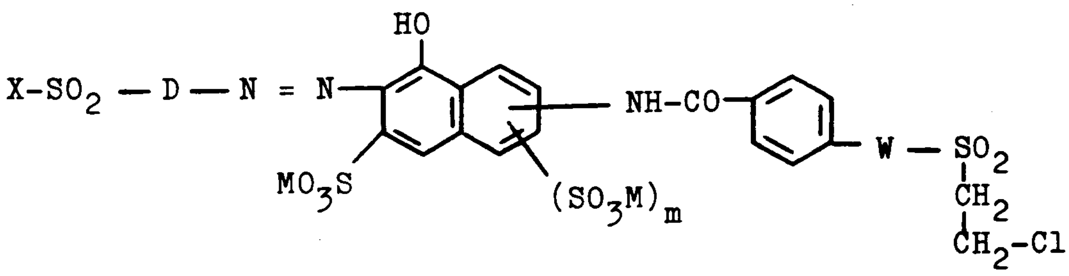

(1b)

in welcher X, D, M und W die in Anspruch 1 genannten Bedeutungen haben oder eine der in den Ansprüchen 2, 3, 4 und 6 genannten bevorzugten Bedeutungen besitzen und die Benzoylaminogruppierung in 2- oder 3-Stellung der 8-Naphthol-Komponente gebunden ist.

**12.** Verbindung nach Anspruch 11, dadurch gekennzeichnet, daß die Benzoylaminogruppierung in 3-Stellung an den 8-Naphthol-Rest gebunden ist, m für die Zahl 1 steht und diese Gruppe $-SO_3M$ in 4-Stellung an den 8-Naphthol-Rest gebunden ist.

**13.** Verfahren zur Herstellung einer Azoverbindung der in Anspruch 1 genannten und definierten allgemeinen Formel (1), dadurch gekennzeichnet, daß man ein Diazoniumsalz einer aromatischen Aminoverbindung entsprechend der allgemeinen Formel (3)

$X - SO_2 - T - D - NH_2$ (3)

in welcher X, T und D die in Anspruch 1 genannten Bedeutungen haben, mit einer Verbindung entsprechend der allgemeinen Formel (4)

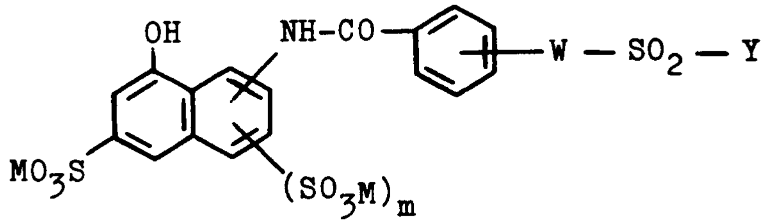

(4)

in welcher M, m, W und Y die in Anspruch 1 genannten Bedeutungen haben, kuppelt.

**14.** Verwendung einer Verbindung von mindestens einem der Ansprüche 1 bis 12, zum Färben (einschließlich Bedrucken) von hydroxy- und/oder carbonamidgruppenhaltigem Material, insbesondere Fasermaterial.

**15.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme und/oder mittels eines säurebindenden Mittels fixiert, dadurch gekennzeichnet, daß man als Farbstoff eine Verbindung von mindestens einem der Ansprüche 1 bis 12 einsetzt.

**Patentansprüche für folgenden Vertragsstaat : ES**

**1.** Verfahen zur Herstellung einer wasserlöslichen Azoverbindung entsprechend der allgemeinen Formel (1)

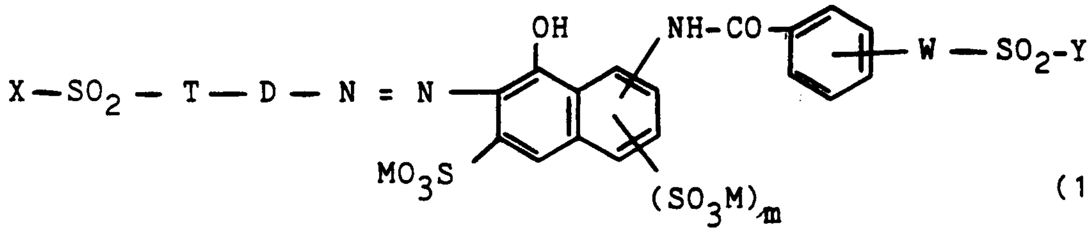

(1)

in welcher bedeuten:

- M ist ein Wasserstoffatom oder ein Alkalimetall;
- T ist eine direkte kovalente Bindung oder ist eine Methylengruppe;
- D ist eine Gruppe entsprechend der allgemeinen Formel (2a), (2b) oder (2c)

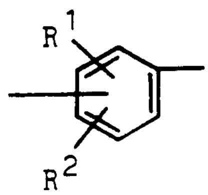

(2a)

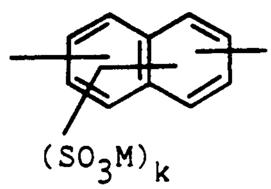

(2b)

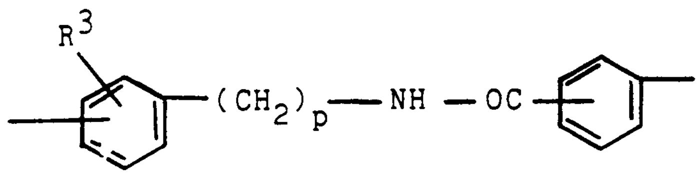

(2c)

in welchen

- $R^1$ Alkyl Von 1 bis 4 C-Atomen, Hydroxy, Nitro, Wasserstoff, Alkoxy von 1 bis 4 C-Atomen, Chlor, Brom oder Carboxy ist,
- $R^2$ Wasserstoff, Alkyl von 1 bis 4 C-Atomen, Alkoxy von 1 bis 4 C-Atomen, Chlor oder Sulfo ist,
- $R^3$ Wasserstoff oder Sulfo ist,
- k für die Zahl Null oder 1 steht (wobei im Falle k gleich Null diese Gruppe ein Wasserstoffatom bedeutet),
- p für die Zahl Null, 1 oder 2 steht und
- M die obengenannte Bedeutung besitzt;
- m ist die Zahl Null, 1 oder 2 (wobei im Falle m gleich Null diese Gruppe ein Wasserstoffatom bedeutet);
- W hat eine der Bedeutungen von T;
- X ist Vinyl, β-Chlorethyl oder β-Sulfatoethyl, bevorzugt Vinyl oder β-Sulfatoethyl;
- Y ist Vinyl oder β-Chlorethyl;

die faserreaktive Benzoylaminogruppierung steht an den 8-Naphthol-Rest in 1-, 2- oder 3-Stellung gebunden;

die einzelnen Formelglieder können zueinander gleiche oder voneinander verschiedene Bedeutungen besitzen;

dadurch gekennzeichnet, daß man ein Diazoniumsalz einer aromatischen Aminoverbindung entsprechend der allgemeinen Formel (3)

$$X - SO_2 - T - D - NH_2 \quad (3)$$

in welcher X, T und D die oben genannten Bedeutungen haben, mit einer Verbindung entsprechend der allgemeinen Formel (4)

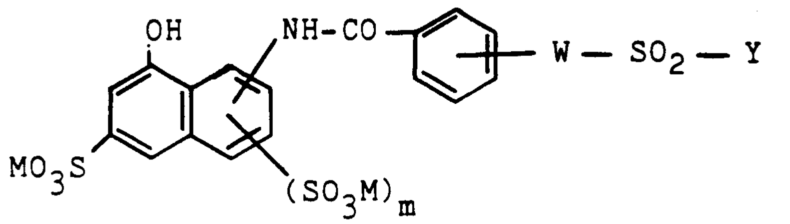

(4)

in welcher M, m, W und Y die oben genannten Bedeutungen haben, kuppelt.

**2.** Verfahren nach Anspruch 1, dadurch gekennzeichnet, daß D einen Rest der allgemeinen Formel (2)

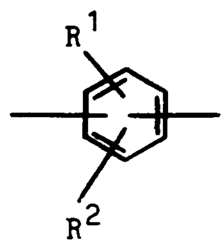

(2a)

ist, in welcher $R^1$ Wasserstoff, Methoxy, Ethoxy, Chlor, Brom oder Carboxy bedeutet und $R^2$ Wasserstoff, Methyl, Ethyl, Methoxy, Ethoxy, Chlor oder Sulfo ist.

**3.** Verfahren nach Anspruch 1, dadurch gekennzeichnet, daß D ein Naphthylenrest ist, der durch eine Sulfogruppe substituiert sein kann.

**4.** Verfahren nach mindestens einem der Ansprüche 1 bis 3, dadurch gekennzeichnet, daß X für die β-Sulfatoethyl-Gruppe steht.

**5.** Verfahren nach mindestens einem der Ansprüche 1 bis 4, dadurch gekennzeichnet, daß Y für die β-Chlorethyl-Gruppe steht.

**6.** Verfahren nach mindestens einem der Ansprüche 1 bis 5, dadurch gekennzeichnet, daß W die Methylengruppe bedeutet.

**7.** Verfahren nach mindestens einem der Ansprüche 1 bis 6, dadurch gekennzeichnet, daß T eine direkte kovalente Bindung bedeutet.

**8.** Verfahren nach Anspruch 6 dadurch gekennzeichnet, daß Y den β-Chlorethyl-Rest darstellt.

**9.** Verfahren nach Anspruch 1, dadurch gekennzeichnet, daß die Verbindung der allgemeinen Formel (1) eine Verbindung entsprechend der allgemeinen Formel (1a)

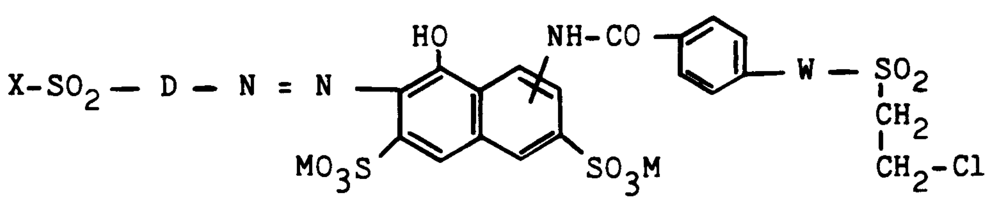

(1a)

ist, in welcher die Benzoylaminogruppierung in 1- oder 2-Stellung, bevorzugt in 1-Stellung, an den 8-Naphtholrest gebunden ist und M, X, D und W eine der in Anspruch 1 genannten Bedeutungen oder eine der in den Ansprüchen 2, 3, 4 und 6 genannten bevorzugten Bedeutungen haben.

**10.** Verfahren nach Anspruch 9, dadurch gekennzeichnet, daß W die Methylengruppe bedeutet.

**11.** Verfahren nach Anspruch 1, dadurch gekennzeichnet, daß die Verbindung der allgemeinen Formel (1) eine Verbindung entsprechend der allgemeinen Formel (1b)

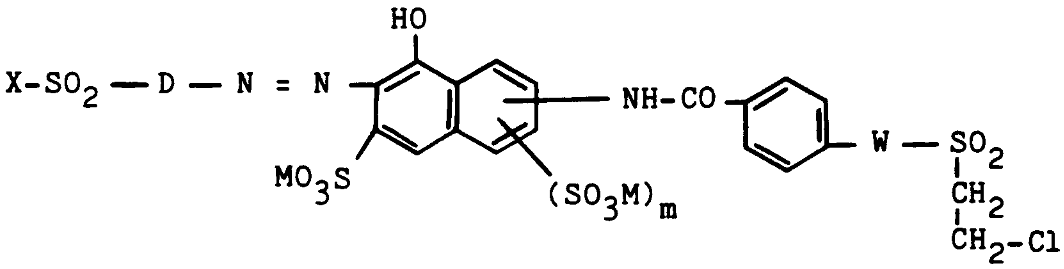

(1b)

ist, in welcher X, D, M und W die in Anspruch 1 genannten Bedeutungen haben oder eine der in den Ansprüchen 2, 3, 4 und 6 genannten bevorzugten Bedeutungen besitzen und die Benzoylaminogruppierung in 2- oder 3-Stellung der 8-Naphthol-Komponente gebunden ist.

**12.** Verfahren nach Anspruch 11, dadurch gekennzeichnet, daß die Benzoylaminogruppierung in 3-Stellung an den 8-Naphthol-Rest gebunden ist, m für die Zahl 1 steht und diese Gruppe $-SO_3M$ in 4-Stellung an den 8-Naphthol-Rest gebunden ist.

**13.** Verwendung einer Verbindung von mindestens einem der Ansprüche 1 bis 12, zum Färben (einschließlich Bedrucken) von hydroxy- und/oder carbonamidgruppenhaltigem Material, insbesondere Fasermaterial.

**14.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme und/oder mittels eines säurebindenden Mittels fixiert, dadurch gekennzeichnet, daß man als Farbstoff eine Verbindung von mindestens einem der Ansprüche 1 bis 13 einsetzt.

**Claims**

**Claims for the following Contracting States : BE, CH, LI, DE, GB, FR, IT**

**1.** A water-soluble azo compound conforming to the formula (1)

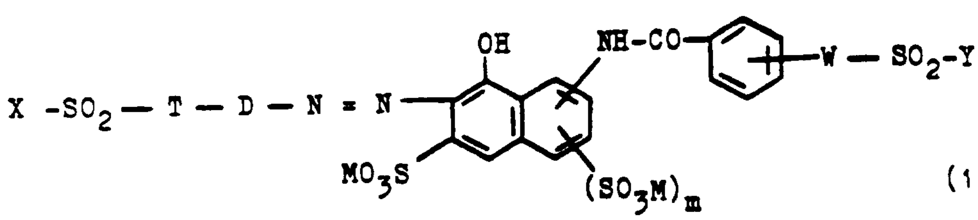

(1)

in which the symbols have the following meanings:

M is a hydrogen atom or an alkali metal,
T is a direct covalent bond or is a methylene group,
D is a group conforming to the formula (2a), (2b) or (2c)

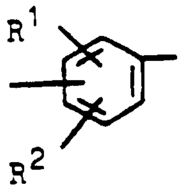
(2a)

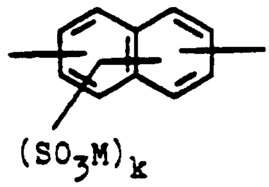
(2b)

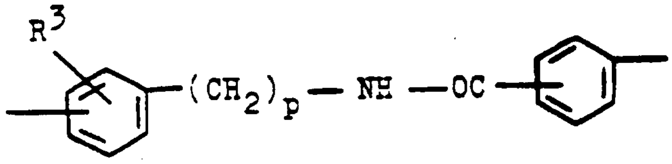
(2c)

in which

| | |
|---|---|
| $R^1$ | is alkyl of 1 to 4 carbon atoms, hydroxyl, nitro, hydrogen, alkoxy of 1 to 4 carbon atoms, chlorine, bromine or carboxyl, |
| $R^2$ | is hydrogen, alkyl of 1 to 4 carbon atoms, alkoxy of 1 to 4 carbon atoms, chlorine or sulfo, |
| $R^3$ | is hydrogen or sulfo, |
| k | is the number zero or 1 (where, if k is zero, this group is a hydrogen atom), |
| p | is the number zero, 1 or 2 and |
| M | has the abovementioned meaning; |
| m | is the number zero, 1 or 2 (where, if m is zero, this group is a hydrogen atom); |
| W | has one of the meanings of T; |
| X | is vinyl, β-chloroethyl or β-sulfatoethyl, preferably vinyl or β-sulfatoethyl; |
| Y | is vinyl or β-chloroethyl; |

the fiber-reactive benzoylamino grouping is bound to the 8-naphthol radical in the 1-, 2- or 3-position;

the individual formula members can have meanings which are identical to or different from one another.

**2.** A compound as claimed in claim 1, wherein D is a radical of the formula (2)

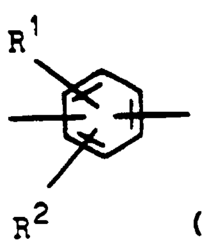
(2)

in which $R^1$ is hydrogen, methoxy, ethoxy, chlorine, bromine or carboxyl and $R^2$ is hydrogen, methyl, ethyl, methoxy, ethoxy, chlorine or sulfo.

**3.** A compound as claimed in claim 1, wherein D is a naphthylene radical which can be substituted by a sulfo group.

**4.** A compound as claimed in at least one of claims 1 to 3, wherein X is the β-sulfatoethyl group.

**5.** A compound as claimed in at least one of claims 1 to 4, wherein Y is the β-chloroethyl group.

**6.** A compound as claimed in at least one of claims 1 to 5, wherein W is the methylene group.

**7.** A compound as claimed in at least one of claims 1 to 6, wherein T is a direct covalent bond.

8. A compound as claimed in claim 6, wherein Y is the $\beta$-chloroethyl radical.

9. A compound as claimed in claim 1 conforming to the formula (1a)

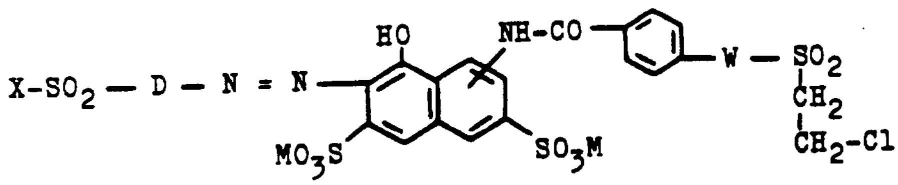

(1a)

in which the benzoylamino grouping is bound to the 8-naphthol radical in the 1- or 2-position, preferably in the 1-position, and M, X, D and W have one of the meanings mentioned in claim 1 or one of the preferred meanings mentioned in claims 2, 3, 4 and 6.

10. A compound as claimed in claim 9, wherein W is the methylene group.

11. A compound as claimed in claim 1 conforming to the formula (1b)

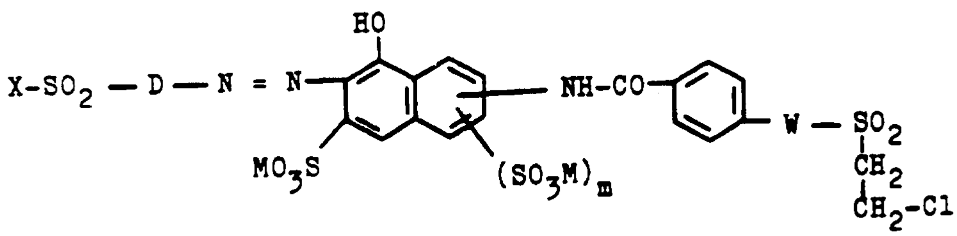

(1b)

in which X, D, M and W have the meanings mentioned in claim 1 or one of the preferred meanings mentioned in claims 2, 3, 4 and 6 and the benzoylamino grouping is bound to the 2- or 3-position of the 8-naphthol component.

12. A compound as claimed in claim 11, wherein the benzoylamino grouping is bound to the 8-naphthol radical in the 3-position, m is the number 1 and this group $-SO_3M$ is bound to the 8-naphthol radical in the 4-position.

13. A process for the preparation of an azo compound of the formula (1) mentioned and defined in claim 1, which comprises coupling a diazonium salt of an aromatic amino compound conforming to the formula (3)

$X - SO_2 - T - D - NH_2$ (3)

in which X, T and D have the meanings mentioned in claim 1 with a compound conforming to the formula (4)

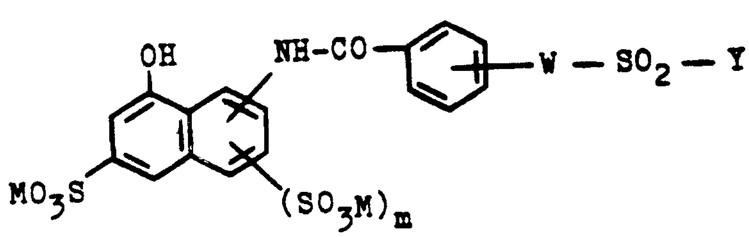

(4)

in which M, m, W and Y have the meanings mentioned in claim 1.

14. Use of a compound of at least one of claims 1 to 12 for the dyeing (including printing) of hydroxyl- and/or carboxamido-containing material, in particular fiber material.

**15.** A process for the dyeing (including printing) of hydroxyl- and/or carboxamido-containing material, in particular fiber material, in which a dye is applied to the material and fixed by means of heat and/or by means of an acid-binding agent, wherein the dye used is a compound as claimed in at least one of claims 1 to 12.

**Claims for the following Contracting State: ES**

**1.** A process for the preparation of a water-soluble azo compound conforming to the formula (1)

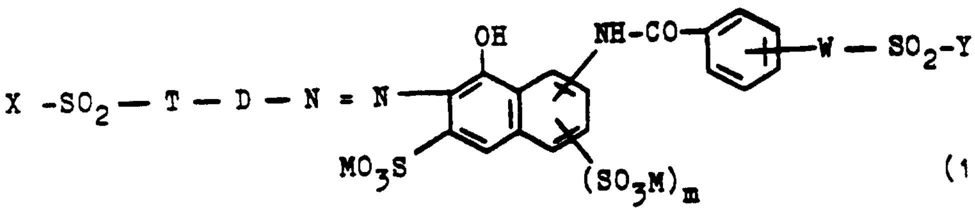
(1)

in which the symbols have the following meanings:

M is a hydrogen atom or an alkali metal,
T is a direct covalent bond or is a methylene group,
D is a group conforming to the formula (2a), (2b) or (2c)

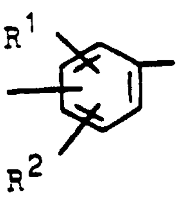
(2a)

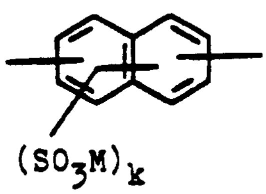
(2b)

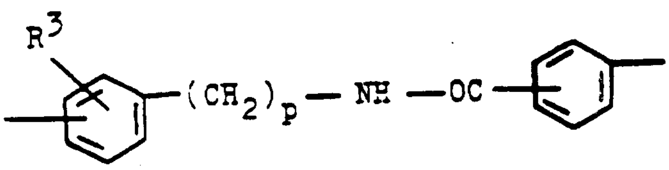
(2c)

in which

$R^1$ is alkyl of 1 to 4 carbon atoms, hydroxyl, nitro, hydrogen, alkoxy of 1 to 4 carbon atoms, chlorine, bromine or carboxyl,
$R^2$ is hydrogen, alkyl of 1 to 4 carbon atoms, alkoxy of 1 to 4 carbon atoms, chlorine or sulfo,
$R^3$ is hydrogen or sulfo,
k is the number zero or 1 (where, if k is zero, this group is a hydrogen atom),
p is the number zero, 1 or 2 and
M has the abovementioned meaning;
m is the number zero, 1 or 2 (where, if m is zero, this group is a hydrogen atom);
W has one of the meanings of T;
X is vinyl, $\beta$-chloroethyl or $\beta$-sulfatoethyl, preferably vinyl or $\beta$-sulfatoethyl;
Y is vinyl or $\beta$-chloroethyl;

the fiber-reactive benzoylamino grouping is bound to the 8-naphthol radical in the 1-, 2- or 3-position;

the individual formula members can have meanings which are identical to or different from one another, which comprises coupling a diazonium salt of an aromatic amino compound conforming to the formula (3)

$X - SO_2 - T - D - NH_2$ (3)

in which X, T and D have the meanings mentioned in claim 1 with a compound conforming to the formula (4)

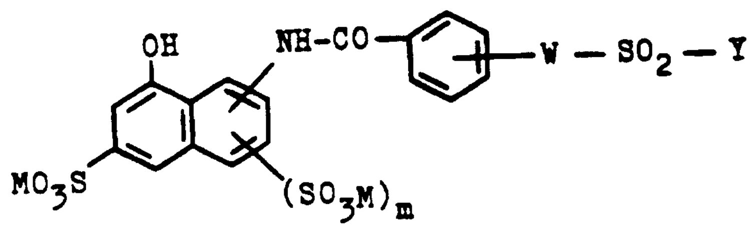

(4)

in which M, m, W and Y have the meanings mentioned above.

2. The process as claimed in claim 1, wherein D is a radical of the formula (2)

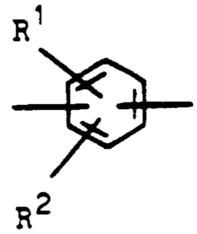

(2)

in which $R^1$ is hydrogen, methoxy, ethoxy, chlorine, bromine or carboxyl and $R^2$ is hydrogen, methyl, ethyl, methoxy, ethoxy, chlorine or sulfo.

3. The process as claimed in claim 1, wherein D is a naphthylene radical which can be substituted by a sulfo group.

4. The process as claimed in at least one of claims 1 to 3, wherein X is the $\beta$-sulfatoethyl group.

5. The process as claimed in at least one of claims 1 to 4, wherein Y is the $\beta$-chloroethyl group.

6. The process as claimed in at least one of claims 1 to 5, wherein W is the methylene group.

7. The process as claimed in at least one of claims 1 to 6, wherein T is a direct covalent bond.

8. The process as claimed in claim 6, wherein Y is the $\beta$-chloroethyl radical.

9. The process as claimed in claim 1, wherein the compound of the formula (1) is a compound conforming to the formula (1a)
in which the benzoylamino grouping is bound to the 8-naphthol radical in the 1- or 2-position, preferably

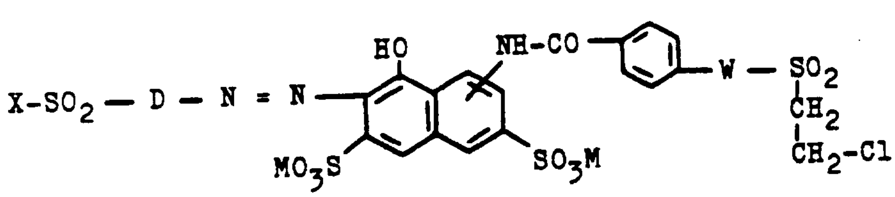

(1a)

in the 1-position, and M, X, D and W have one of the meanings mentioned in claim 1 or one of the preferred meanings mentioned in claims 2, 3, 4 and 6.

10. The process as claimed in claim 9, wherein W is the methylene group.

**11.** The process as claimed in claim 1, wherein the compound of the formula (1) is a compound conforming to the formula (1b)

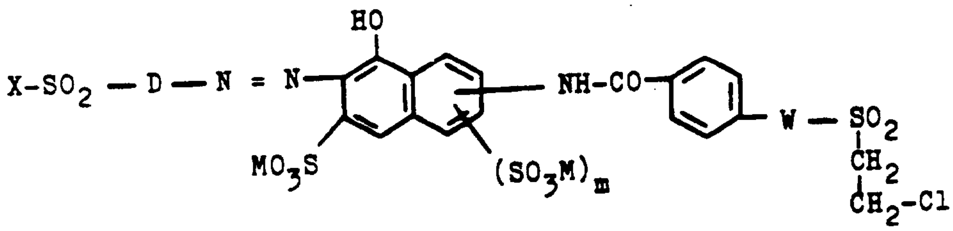

(1b)

in which X, D, M and W have the meanings mentioned in claim 1 or one of the preferred meanings mentioned in claims 2, 3, 4 and 6 and the benzoylamino grouping is bound to the 2- or 3-position of the 8-naphthol component.

**12.** The process as claimed in claim 11, wherein the benzoylamino grouping is bound to the 8-naphthol radical in the 3-position, m is the number 1 and this group $-SO_3M$ is bound to the 8-naphthol radical in the 4-position.

**13.** Use of a compound of at least one of claims 1 to 12 for the dyeing (including printing) of hydroxyl- and/or carboxamido-containing material, in particular fiber material.

**14.** A process for the dyeing (including printing) of hydroxyl- and/or carboxamido-containing material, in particular fiber material, in which a dye is applied to the material and fixed by means of heat and/or by means of an acid-binding agent, wherein the dye used is a compound of at least one of claims 1 to 12.

**Revendications**

**Revendications pour les Etats contractants suivants : BE, CH, LI, DE, GB, FR, IT**

**1.** Composé azoïque soluble dans l'eau de formule générale (1)

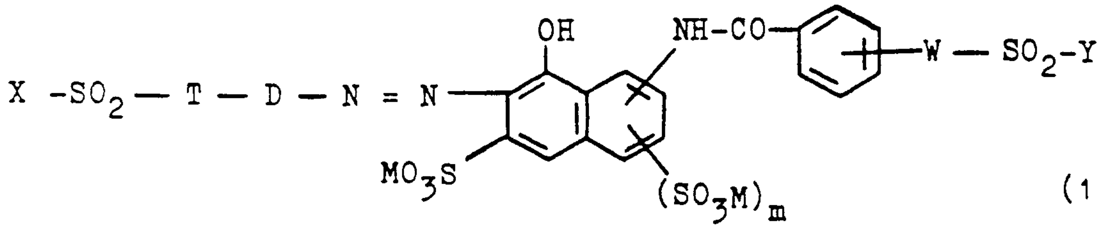

(1)

dans laquelle :

M est un atome d'hydrogène ou un métal alcalin

T est une liaison covalente directe ou un groupe méthylène ;

D est un groupe de formule générale (2a), (2b) ou (2c)

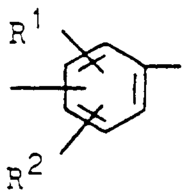 (2a)

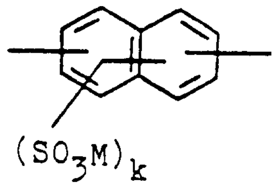 (2b)

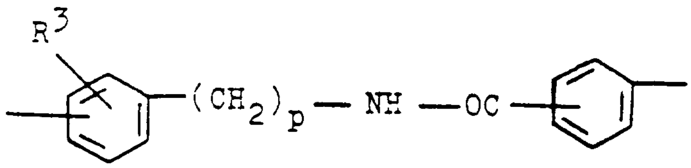 (2c)

dans lesquelles

$R^1$ est un radical alkyle ayant de 1 à 4 atomes de carbone, hydroxy, nitro, hydrogéno, alcoxy ayant de 1 à 4 atomes de carbone, chloro, bromo ou carboxy,

$R^2$ est un hydrogène ou un radical alkyle ayant de 1 à 4 atomes de carbone, alcoxy ayant de 1 à 4 atomes de carbone, chloro ou sulfo,

$R^3$ est un hydrogène ou le radical sulfo,

k est le nombre zéro ou 1 (auquel cas, quand k vaut zéro, ce groupe est un atome d'hydrogène),

p est le nombre zéro, 1 ou 2, et

M a les significations données ci-dessus ;

m est le nombre zéro, 1 ou 2 (auquel cas, quand m vaut zéro, ce groupe est un atome d'hydrogène) ;

W a les significations de T ;

X est le radical vinyle, $\beta$-chloroéthyle ou $\beta$-sulfatoéthyle, de préférence vinyle ou $\beta$-sulfatoéthyle ;

Y est le radical vinyle ou $\beta$-chloroéthyle ;

le groupement benzoylamino réactif sur les fibres est lié au résidu 8-naphtol en position 1, 2 ou 3 ;

les différents éléments de la formule peuvent avoir des significations identiques ou différentes les unes des autres.

2. Composé selon la revendication 1, caractérisé en ce que D est un résidu de formule générale (2)

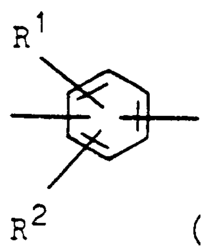 (2a)

dans laquelle $R^1$ est un hydrogène ou un radical méthoxy, éthoxy, chloro, bromo ou carboxy, et $R^2$ est un hydrogène ou un radical méthyle, éthyle, méthoxy, éthoxy, chloro ou sulfo.

3. Composé selon la revendication 1, caractérisé en ce que D est un résidu naphtylène pouvant être substitué par une groupe sulfo.

4. Composé selon au moins l'une des revendications 1 à 3, caractérisé en ce que X est le groupe $\beta$-sulfatoéthyle.

5. Composé selon au moins l'une des revendications 1 à 4, caractérisé en ce que Y est le groupe $\beta$-chloroéthyle.

6. Composé selon au moins l'une des revendications 1 à 5, caractérisé en ce que W est le groupe méthylène.

7. Composé selon au moins l'une des revendications 1 à 6, caractérisé en ce que T est une liaison covalente directe.

8. Composé selon la revendication 6, caractérisé en ce que Y est le radical $\beta$-chloroéthyle.

9. Composé selon la revendication 1, de formule générale (1a)

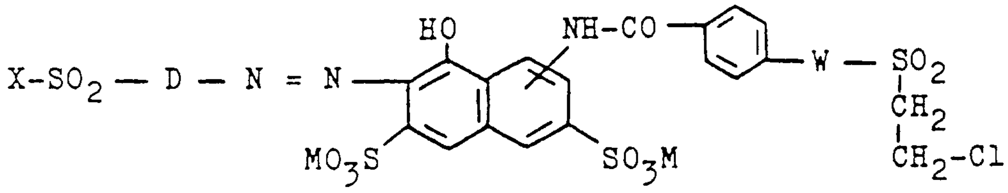

(1a)

dans laquelle le groupement benzoylamino est fixé au résidu 8-naphtol en position 1 ou 2 et de préférence en position 1, et M, X, D et W ont l'une des significations données dans la revendication 1 ou l'une des revendications préférées données dans les revendications 2, 3, 4 et 7.

10. Composé selon la revendication 1, caractérisé en ce que W est le groupe méthylène.

11. Composé selon la revendication 1, de formule générale (1b)

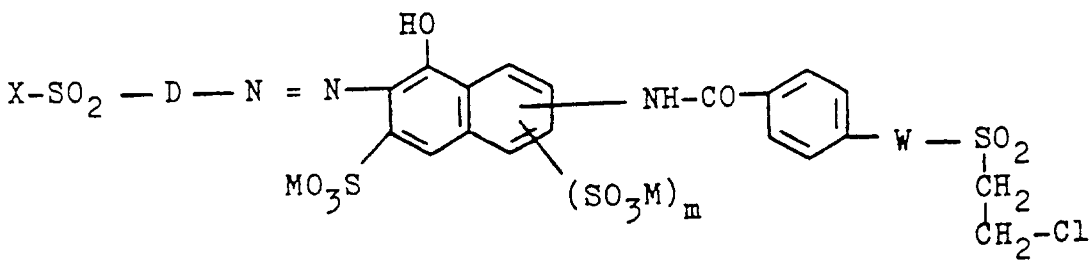

(1b)

dans laquelle X, D, M et W ont les significations données dans la revendication 1 ou l'une des significations préférées données dans les revendications 2, 3, 4 et 7, et le groupement benzoylamino est fixé au composant 8-naphtol en position 2 ou 3.

12. Composé selon la revendication 11, caractérisé en ce que le groupement benzoylamino est fixé au résidu 8-naphtol en position 3, m vaut 1, et ce groupe $-SO_3M$ est lié en position 4 au résidu 8-naphtol.

13. Procédé pour préparer un composé azoïque ayant la formule générale (1) donnée et définie dans la revendication 1, caractérisé en ce qu'on copule un sel de diazonium d'un composé aminé aromatique de formule générale (3)

$X - SO_2 - T - D - NH_2$ (3)

dans laquelle X, T et D ont les significations données dans la revendication 1, avec un composé de formule générale (4)

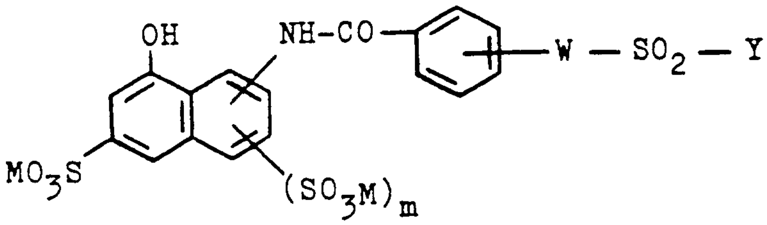

(4)

dans laquelle M, m, W et Y ont les significations données dans la revendication 1.

**14.** Utilisation d'un composé selon au moins l'une des revendications 1 à 12 pour teindre (et notamment imprimer, un matériau contenant des groupes hydroxy et/ou carboxamide, en particulier un matériau fibreux.

**15.** Procédé pour teindre (et notamment imprimer) un matériau contenant des groupes hydroxy et/ou carboxamide, en particulier un matériau fibreux, dans lequel on applique un colorant sur le matériau et on le fixe à l'aide de la chaleur et/ou d'un agent fixant les acides, caractérisé en ce qu'on utilise comme colorant un composé selon au moins l'une des revendications 1 à 12.

**Revendications pour l'Etat contractant suivant : ES**

**1.** Procédé pour préparer un composé azoïque soluble dans l'eau de formule générale (1)

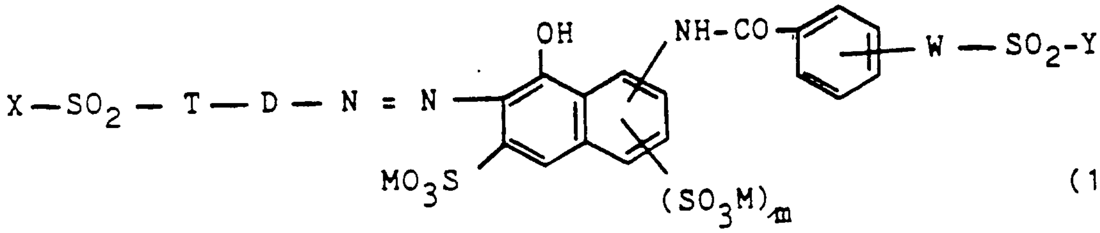

(1)

dans laquelle :

M est un atome d'hydrogène ou un métal alcalin ;

T est une liaison covalente directe ou un groupe méthylène ;

D est un groupe de formule générale (2a), (2b) ou (2c)

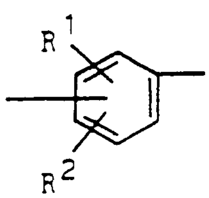

(2a)

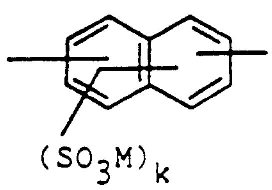

(2b)

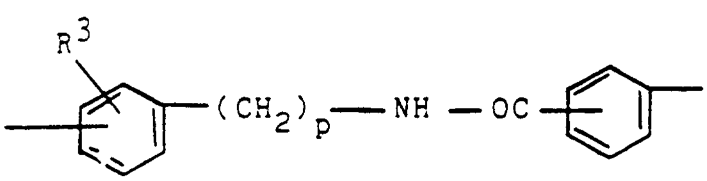

(2c)

dans lesquelles

$R^1$ est un radical alkyle ayant de 1 à 4 atomes de carbone, hydroxy, nitro, hydrogéno, alcoxy ayant de 1 à 4 atomes de carbone, chloro, bromo ou carboxy,

$R^2$ est un hydrogène ou un radical alkyle ayant de 1 à 4 atomes de carbone, alcoxy ayant de 1 à 4

atomes de carbone, chloro ou sulfo,
$R^3$ est un hydrogène ou le radical sulfo,
k est le nombre zéro ou 1 (auquel cas, quand k vaut zéro, ce groupe est un atome d'hydrogène),
p est le nombre zéro, 1 ou 2, et
M a les significations données ci-dessus ;
m est le nombre zéro, 1 ou 2 (auquel cas, quand m vaut zéro, ce groupe est un atome d'hydrogène) ;
W a les significations de T ;
X est le radical vinyle, β-chloroéthyle ou β-sulfatoéthyle, de préférence vinyle ou β-sulfatoéthyle ;
Y est le radical vinyle ou β-chloroéthyle ;
le groupement benzoylamino réactif sur les fibres est lié au résidu 8-naphtol en position 1, 2 ou 3 ;
les différents éléments de la formule peuvent avoir des significations identiques ou différentes les unes des autres ; caractérisé en ce qu'on copule un sel de diazonium d'un composé aminé aromatique de formule générale (3)

$X - SO_2 - T - D - NH_2$ (3)

dans laquelle X, T et D ont les significations données dans la revendication 1, avec un composé de formule générale (4)

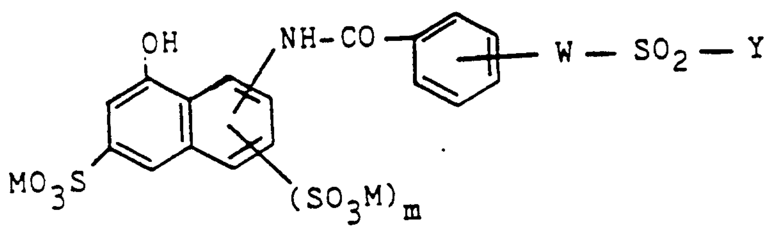

(4)

dans laquelle M, m, W et Y ont les significations données ci-dessus.

**2.** Procédé selon la revendication 1, caractérisé en ce que D est un résidu de formule générale (2)

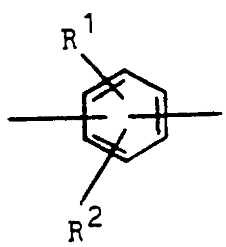

(2a)

dans laquelle $R^1$ est un hydrogène ou un radical méthoxy, éthoxy, chloro, bromo ou carboxy, et $R^2$ est un hydrogène ou un radical méthyle, éthyle, méthoxy, éthoxy, chloro ou sulfo.

**3.** Procédé selon la revendication 1, caractérisé en ce que D est un résidu naphtylène pouvant être substitué par une groupe sulfo.

**4.** Procédé selon au moins l'une des revendications 1 à 3, caractérisé en ce que X est le groupe β-sulfatoéthyle.

**5.** Procédé selon au moins l'une des revendications 1 à 4, caractérisé en ce que Y est le groupe β-chloroéthyle.

**6.** Procédé selon au moins l'une des revendications 1 à 5, caractérisé en ce que W est le groupe méthylène.

**7.** Procédé selon au moins l'une des revendications 1 à 6, caractérisé en ce que T est une liaison covalente directe.

**8.** Procédé selon la revendication 6, caractérisé en ce que Y est le radical $\beta$-chloroéthyle.

**9.** Procédé selon la revendication 1, caractérisé en ce que le composé de formule générale (1) est un composé de formule générale (1a)

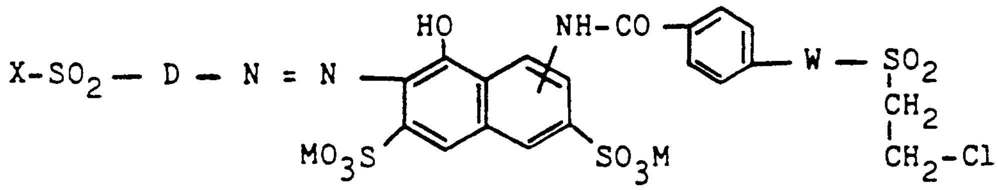

(1a)

dans laquelle le groupement benzoylamino est fixé au résidu 8-naphtol en position 1 ou 2 et de préférence en position 1, et M, X, D et W ont l'une des significations données dans la revendication 1 ou l'une des revendications préférées données dans les revendications 2, 3, 4 et 7.

**10.** Procédé selon la revendication 9, caractérisé en ce que W est le groupe méthylène.

**11.** Procédé selon la revendication 1, caractérisé en ce que le composé de formule générale (1) est un composé de formule générale (1b)

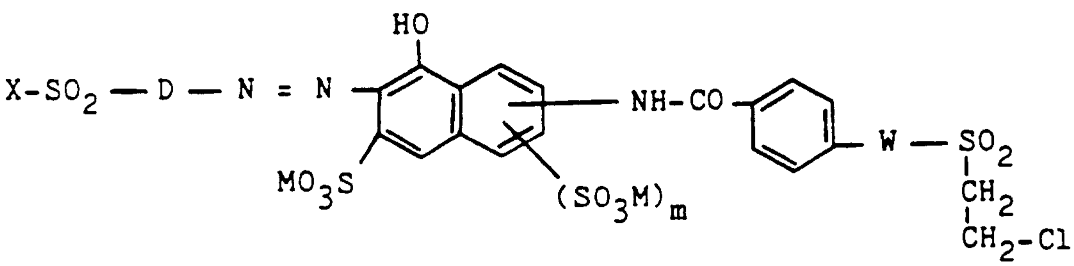

(1b)

dans laquelle X, D, M et W ont les significations données dans la revendication 1 ou l'une des significations préférées données dans les revendications 2, 3, 4 et 7, et le groupement benzoylamino est fixé au composant 8-naphtol en position 2 ou 3.

**12.** Procédé selon la revendication 11, caractérisé en ce que le groupement benzoylamino est fixé au résidu 8-naphtol en position 3, m vaut 1, et ce groupe $-SO_3M$ est lié en position 4 au résidu 8-naphtol.

**13.** Utilisation d'un composé selon au moins l'une des revendications 1 à 12, pour teindre (et notamment imprimer, un matériau contenant des groupes hydroxy et/ou carboxamide, en particulier un matériau fibreux.

**14.** Procédé pour teindre (et notamment imprimer) un matériau contenant des groupes hydroxy et/ou carboxamide, en particulier un matériau fibreux, dans lequel on applique un colorant sur le matériau et on le fixe à l'aide de la chaleur et/ou d'un agent fixant les acides, caractérisé en ce qu'on utilise comme colorant un composé selon au moins l'une des revendications 1 à 13.